# EUROPÄISCHE PATENTSCHRIFT

(11) **EP 3 438 024 B1**
(45) Veröffentlichungstag und Bekanntmachung des Hinweises auf die Patenterteilung: **16.10.2019**
(21) Anmeldenummer: 17001330.4
(22) Anmeldetag: 03.08.2017
(51) Int. Cl.: F16G 3/08, F16G 3/10, B65G 15/52, B65G 15/00

(54) **STABBAND FÜR STABBANDFÖRDERER LANDWIRTSCHAFTLICHER MASCHINEN**
ROD BELT FOR ROD BELT CONVEYORS OF AGRICULTURAL MACHINES
COURROIE À BARREAUX POUR CONVOYEUR À BANDE À BARREAUX DES MACHINES AGRICOLES

(43) Veröffentlichungstag der Anmeldung: 06.02.2019
(73) Patentinhaber: Arnold Jäger Holding GmbH, 30625 Hannover (DE)
(72) Erfinder: Van Wolde, Harm Jan, 9992 TT Huizinge (NL)
(74) Vertreter: Seewald, Jürgen

(56) Entgegenhaltungen:
- EP-A1- 2 845 459
- WO-A1-2016/068296
- DD-A5- 286 093
- DE-U1- 8 415 524
- US-A- 3 015 381

## Beschreibung

Die vorliegende Erfindung betrifft ein Stabband für Stabbandförderer landwirtschaftlicher Maschinen gemäß dem Oberbegriff des Anspruchs 1.

Stabbänder dieser Art gehören seit langem zum Stand der Technik wie beispielhaft aus der DE 1834273 U, der DE 29517673 U1 und der DE 19520927 A1 hervorgeht. Bei diesen Stabbändern entspricht die Länge der Befestigungsbereiche der Stäbe im Wesentlichen der Breite der Gurte. Die Befestigung der Stäbe an den Gurten erfolgt durch Niete oder ähnliche Befestigungsmittel. Dazu sind für die Befestigungsmittel in den Befestigungsbereichen der Stäbe entsprechende Löcher vorgesehen, die mit Löchern in den Gurten fluchten. DE8415525 U1 und EP 2 845 459 A1 offenbaren Stabbänder gemäß dem Oberbegriff des Anspruchs 1.

Für den Gebrauch müssen die Riemen endlos gemacht werden. Das geschieht nach dem Stand der Technik auf mechanischem Wege, zum Beispiel mittels Schlössern, oder aber die Riemen werden an ihren Stoßstellen überlappt und endlos vulkanisiert oder insgesamt endlos gewickelt. Die beiden letzten genannten Verbindungen haben eine lange Lebensdauer, allerdings auch den Nachteil, dass derartig endlos gemachte Bänder nicht einfach montiert und demontiert werden können, da dazu die Antriebe ausgebaut werden müssen.

Aufgabe der vorliegenden Erfindung ist es daher, ein Stabband gattungsgemäßer Art zur Verfügung zu stellen, welches eine endlose Verbindung mit großer Festigkeit aufweist, und gleichzeitig einfach demontierbar und montierbar ist.

Diese Aufgabe wird erfindungsgemäß mit einem Stabband gelöst, welches die Merkmale des Anspruchs 1 aufweist.

Die seitlich an die Riemen angrenzend angeordneten Hilfsriemenabschnitte überbrücken die Riemenenden, wobei die Riemen und die Hilfsriemenabschnitten über die Stäbe der Stabbänder miteinander verblockt sind. Die Hilfsriemenabschnitte bilden somit einen Bypass, über den die Zugkräfte an der Stoßstelle der Riemenenden vorbei geleitet werden. Während nach dem Stand der Technik die Beladung und Zugkräfte bei den Stabbändern nur von den endlosen Riemen getragen werden, werden die Beladung und die Zugkräfte jetzt von den Hilfsriemenabschnitten getragen. Dadurch könnten die Riemenenden im Prinzip lose bleiben, das heißt, sie müssen, was die Kraftübertragung betrifft, gar nicht miteinander verbunden werden. Aus funktionellen und ästhetischen Gründen ist eine solche lose Stoßstelle aber zu vermeiden. Da von den Riemen keine bzw. nur sehr geringe Zugkräfte zu übertragen sind, können die Riemenenden einfach verbunden werden z. B. mittels eines sogenannten Single Pitch Overlap. Wenn es gewünscht ist, können die Riemen zusätzlich zur Übertragung von Zugkräften herangezogen werden. In diesem Fall ist der Überlappungsbereich der Riemenenden größer zu wählen oder ein Riemenschloss aus Metall in bekannter Weise einzubauen.

Die Endlosverbindung eines erfindungsgemäßen Stabbandes hat eine lange Standzeit und ist einfach zu montieren bzw. demontieren.

Die Erfindung wird nachstehend anhand von Ausführungsbeispielen näher erläutert. In der dazugehörigen Zeichnung zeigt:
- Fig. 1: einen perspektivischen Blick von schräg oben auf einen Abschnitt eines Stabbandes im Bereich der Endlosverbindungen in einer ersten Ausführungsform der Erfindung,
- Fig. 2: einen vergrößerten Ausschnitt A gemäß Figur 1,
- Fig. 3: eine Darstellung gemäß Figur 2 vor dem Endlosmachen,
- Fig. 4: eine Darstellung gemäß Figur 2 in einer zweiten Ausführungsform der Erfindung, und
- Fig. 5: eine Darstellung gemäß Figur 2 in einer dritten Ausführungsform der Erfindung.

Das in der Zeichnung dargestellte Stabband 1 weist vier parallel zueinander angeordneten umlaufenden Riemen 2 auf. Die Riemen 2 sind in diesem Ausführungsbeispiel als Nockenriemen ausgeführt und können zum Beispiel aus Gummi bestehen, der durch Gewebeeinlagen verstärkt ist.

Auf der Unterseite der Riemen 2 sind Nocken 3 vorgesehen, die in einer vorgegebenen Teilung voneinander beabstandet sind. Diese Nocken 3 dienen dem Zwangsantrieb des Stabbandes 1. Dazu greifen Antriebsmittel von nicht dargestellten Antriebsrädern in Lücken 4 ein, die zwischen den Nocken 3 angeordnet sind. Derartige Ausführungen sind aus dem Stand der Technik bekannt und müssen daher nicht näher erläutert werden.

Der Abstand zwischen den Riemen 2 ist durch Stäbe 5 hergestellt, die quer zur Förderrichtung des Stabbandes 1 und parallel zueinander angeordnet und an ihren Enden mit den Riemen 2 verbunden sind. Dazu sind die Stäbe 5 mit abgeflachten Endbereichen 5.1 versehen, die durch Schmieden aus Rundstäben hergestellt sind und auf den Riemen 2 aufliegen. Die Endbereiche 5.1 weisen zwei voneinander beabstandete Löcher 6 auf, die mit ebensolchen Löchern 6.1 in den Riemen 2 fluchten. Die miteinander fluchtenden Löcher 6 und 6.1 nehmen nicht dargestellte Niete auf, mit denen die Stäbe 5 an den Riemen 2 befestigt werden.

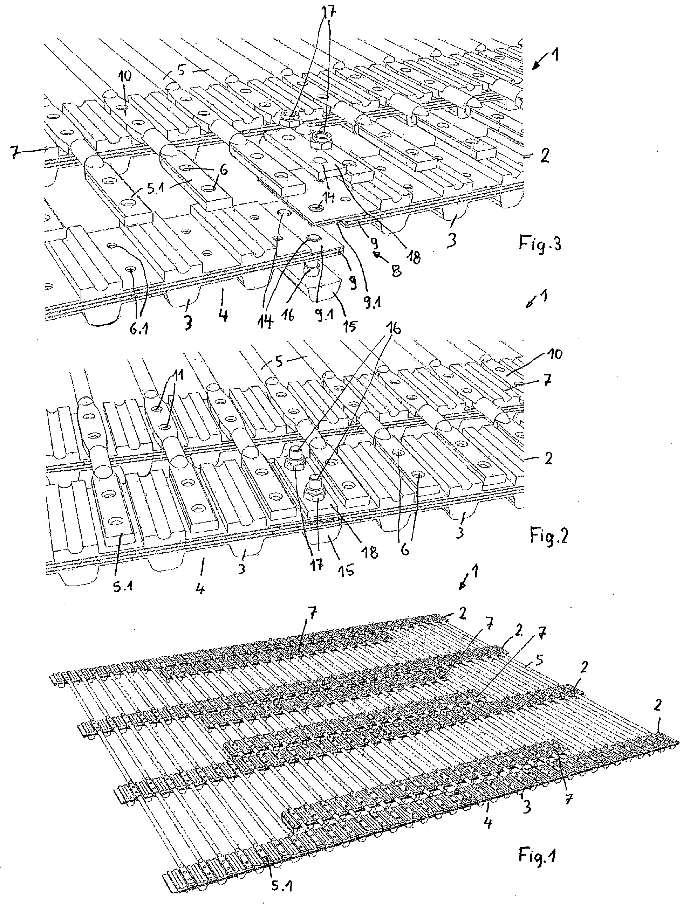

Seitlich angrenzend an jeden der Riemen 2 ist jeweils ein Hilfsriemenabschnitt 7 angeordnet. Die Hilfsriemenabschnitte 7 haben in dem Ausführungsbeispiel gemäß den Fig. 1 bis 3 den gleichen Aufbau wie die Riemen 2. Sie können aber auch anders aufgebaut sein (siehe z. B. Fig, 4 und 5). Entscheidend ist, dass sie Zugkräfte übertragen können.

Die Hilfsriemenabschnitte 7 überbrücken die Stoßstelle 8 zwischen den Enden 9 der Riemen 2. Die Riemen 2 und die Hilfsriemenabschnitte 7 sind über die Stäbe 5 miteinander verblockt. Dazu weisen die Stäbe 5 weitere abgeflachte Befestigungsbereiche 10 auf, die auf den Hilfsriemenabschnitten 7 aufliegen. Diese Endbereiche 10 weisen zwei voneinander beabstandete Löcher 11 für nicht dargestellte Befestigungsmittel auf, wie z. B. Niete, die die abgeflachten Endbereiche 10 sowie die Hilfsriemenabschnitte 7 im befestigten Zustand durchsetzen.

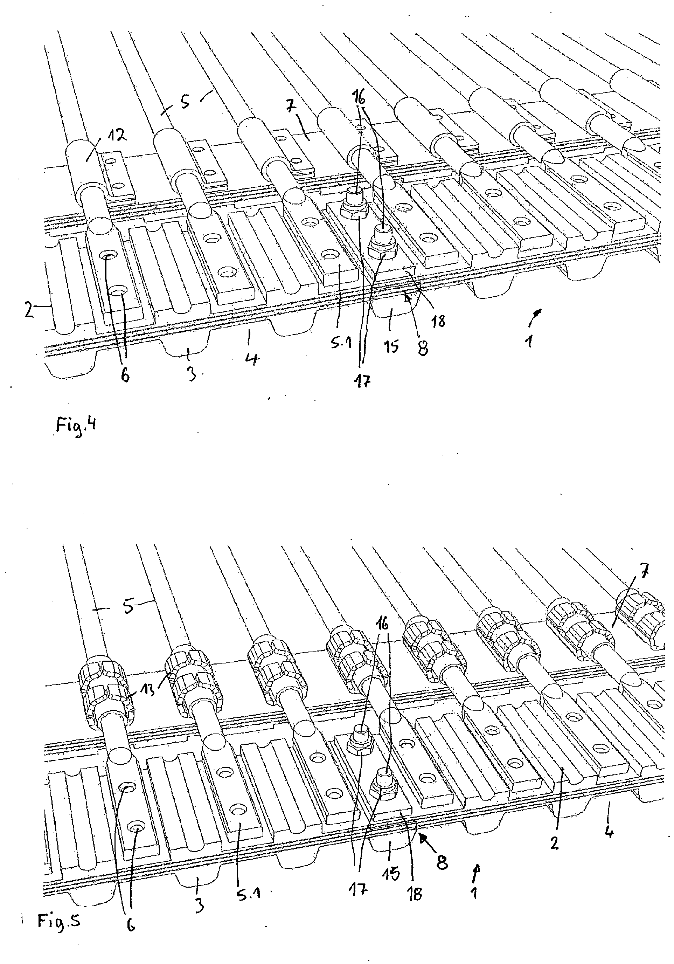

Die Befestigung der Stäbe 5 auf den Hilfsriemenabschnitten 10 kann auch auf andere Weise erfolgen, so z. B. mittels von Schellen 12, wie in Fig. 4 dargestellt bzw. mittels von Klammern 13, wie in Fig. 5 dargestellt. In den Fig. 4 und 5 tragen gleiche oder gleichwirkende Bauteile die Bezugszeichen des Ausführungsbeispiels gemäß den Fig. 1 bis 3.

Die Hilfsriemenabschnitte 7 übertragen die Zugkräfte unter Umgehung der Stoßstelle 8 der Enden 9 der Riemen 2. Da an den Enden 9 der Riemen 2 keine Zugkräfte wirken, kann die Verbindung der beiden Enden 9 auf einfache Weise durch einen sogenannten Single Pitch Overlap erfolgen, wie aus Fig. 3 hervorgeht. Dazu werden die Enden 9 der Riemen 2 im Rahmen der Teilung der Nocken 3 abgestuft und die abgestuften Enden 9.1 überlappend aufeinandergelegt. In beiden abgestuften Enden 9.1 sind im Abstand voneinander Befestigungslöcher 14 vorgesehen, die miteinander fluchten. Zur Verbindung der beiden Enden 9 der Riemen 2 ist ein loser Nocken 15 vorgesehen, in den im Abstand der Befestigungslöcher 14 zwei Schraubenbolzen 16 einvulkanisiert sind. Zur Herstellung der Verbindung werden die Schraubenbolzen 16 des losen Nockens 15 von unten durch die Befestigungslöcher 14 in den abgestuften Enden 9.1 und einer Ankerplatte 18 hindurchgesteckt und anschließend die Verbindung durch Aufschrauben von Muttern 17 auf die Schraubenbolzen 16 komplettiert. Der lose Nocken 15 liegt bei dieser Verbindung in der Teilung der festen Nocken 3.

## Patentansprüche

1. Stabband für Stabbandförderer landwirtschaftlicher Maschinen mit quer zur Laufrichtung und parallel zueinander angeordneten Stäben (5), wobei die Stäbe (5) abgeflachte und gelochte Befestigungsbereiche (5.1) aufweisen, mit denen sie auf parallel zueinander umlaufenden zugfesten, elastischen Riemen (2) aufliegen und durch Niete oder ähnliche Befestigungsmittel, die den Befestigungsbereich (5.1) und den Riemen (2) durchsetzen, mit den Riemen (2) verbunden sind, deren beiden Enden (9) eine Stoßstelle (8) bilden, **dadurch gekennzeichnet, dass** seitlich angrenzend an die Riemen (2) jeweils ein Hilfsriemenabschnitt (7) angeordnet ist, der die Stoßstelle (8) zwischen den Riemenenden (9) überbrückt, wobei die Riemen (2) und die Hilfsriemenabschnitte (7) mittels der Stäbe (5) miteinander verblockt sind.

## Claims

1. Rod belt for rod belt conveyors of agricultural machines with rods (5) arranged transverse to the direction of movement and parallel to one another, wherein the rods (5) have flattened and perforated fastening regions (5.1), with which they rest on tensile elastic belts (2) circulating parallel to one another and are connected to the belts (2) by rivets or similar fastening means, which pass through the fastening region (5.1) and the belts (2), both ends (9) of which form a joint (8), **characterised in that** an auxiliary belt section (7) is arranged in each case laterally adjoining the belts (2), said auxiliary belt section (7) spans the joint (8) between the belt ends (9), wherein the belts (2) and the auxiliary belt sections (7) are interlocked with one another by means of the rods (5).

## Revendications

1. Courroie à barreaux pour transporteurs à barreaux de machines agricoles comportant des barreaux (5) disposés transversalement au sens de défilement et parallèlement les uns par rapport aux autres, les barreaux (5) présentant des zones de fixation aplaties et perforées (5.1), par l'intermédiaire desquelles celles-ci reposent sur des courroies (2) élastiques, résistants à la traction, tournant parallèlement les uns par rapport aux autres et sont reliées, au moyen de rivets ou de moyens de fixation similaires qui traversent la zone de fixation (5.1) et la courroie (2), aux courroies (2), dont les deux extrémités (9) forment une jonction (8), **caractérisée en ce qu'**une section de courroie auxiliaire (7) respective est disposée de façon latéralement adjacente aux courroies (2), section de courroie auxiliaire qui ponte la jonction (8) entre les extrémités de courroie (9), les courroies (2), et les sections de courroie auxiliaires (7) étant verrouillées entre elles au moyen des barreaux (5).
